# EUROPEAN PATENT SPECIFICATION

(11) **EP 0 868 495 B1**
(45) Date of publication and mention of the grant of the patent: **14.06.2000**
(21) Application number: 96941684.1
(22) Date of filing: 18.12.1996
(51) Int. Cl.: C09J 7/02, B65D 33/18, B65D 33/34

(54) **ADHESIVE STRIP AND SAFETY BAG**
KLEBEBAND UND AIRBAG
RUBAN ADHESIF ET SAC DE SECURITE

(30) Priority: 18.12.1995 FI 956068
(43) Date of publication of application: 07.10.1998
(73) Proprietor: AMERPLAST OY, SF-33731 Tampere (FI)
(72) Inventor: OLKINUORA, Ari, FIN-33480 Ylöjärvi (FI); HENTTONEN, Juha, FIN-33710 Tampere (FI)
(74) Representative: Kahilainen, Hannu Juhani
(86) International application number: FI9600673
(87) International publication number: WO9722674

(56) References cited:
- EP-A- 0 341 699
- EP-A- 0 373 748
- EP-A- 0 459 012
- EP-A- 0 459 311
- EP-A- 0 460 459
- WO-A-91/04199
- DE-C- 2 647 357
- GB-A- 2 145 997
- GB-A- 2 193 484
- GB-A- 2 211 760
- GB-A- 2 234 489
- GB-A- 2 239 181
- GB-A- 2 243 143
- GB-A- 2 255 962
- US-A- 4 510 621
- US-A- 4 838 708

## Description

The invention relates to a safety bag according to the preamble of the annexed claim 1.

Safety bags are used particularly for storing money, valuables or the like, and particularly for their transportation e.g. by courier. When a valuable consignment has been placed in the bag, the opening of the bag is closed with an adhesive tape which makes a seal-like closing. An unauthorized break of the opening e.g. with criminal intentions is revealed by a safety mark made by colouring and gluing agent arrangements or the like contained in the adhesive tape and/or the area surrounding the opening, wherein e.g. some of the colouring agent pressed on that part of the safety bag which is left underneath the adhesive tape adheres to the glue surface of the adhesive tape.

As to the state of art, reference is made to EP-0 459 311, in which a safety bag with a closing flap is presented. Said closing flap, being an extension of the back wall of the safety bag, is used for closing the opening between the front and back walls by turning the closing flap onto the front wall, whereby the adhesive in connection with the bag is fixed to combine the front wall and the closing flap. Further, reference is made to the publication GB-2 149 380. In this solution, for closing an opening formed in the upper part of the safety bag, the actual safety bag is provided with a distinct extension which is a flap or the like having substantially the width of the safety bag and comprising a film-like or corresponding bottom part made of plastic or the like, provided with a pre-installed adhesive tape or the like to be adhered on top of the opening in the direction of the opening. Said upper tape of the safety bag is fully covered with a detachable protective slip, such as a band treated with silicon, which is intended to be removed before closing the bag. When closing the safety bag, said extension of the safety bag is folded down on top of the upper part of the front wall, wherein the adhesive tape covers the opening and adheres to the part of the front wall surrounding the opening. In the vicinity of the opening of the safety bag, in connection with the part of the front wall, a safety mark stripe is provided for producing said safety mark for revealing a break.

The aim of the present invention is to present a safety bag with an adhesive strip which is ready for use as such and pre-installed in a safety bag without any additional means. A further aim is to present a reliable safety bag with a simple structure. Thus an important aim of the invention is to improve the prior art.

To achieve the above aims, the safety bag is mainly characterized in that the protective slip further comprises a releasing part attached to the counterfoil for removing the protective slip from the glue layer by grasping the releasing part, and wherein the releasing part is placed as an extension of the counterfoil, adjoining the longitudinal edge of the counterfoil. By using the releasing part, the glue layer can be revealed in a safe manner easily and rapidly without damaging the safety arrangement in the adhesive.

In the following description, the invention will be described in detail with reference to the appended drawings, in which
- Fig. 1: is a perspective view on a first embodiment of the adhesive strip to be used in connection the safety bag according to the invention, in a cross-section,
- Figs. 2-5: show some other embodiments of the adhesive strip to be used in connection with the safety bag according to the invention, seen from the direction of Fig. 1,
- Fig. 6: shows an embodiment of the safety bag seen in a plan view, and
- Figs. 7a-c: show the steps of closing the safety bag at the opening in a partial perspective view on two alternative applications for locating the adhesive strip.

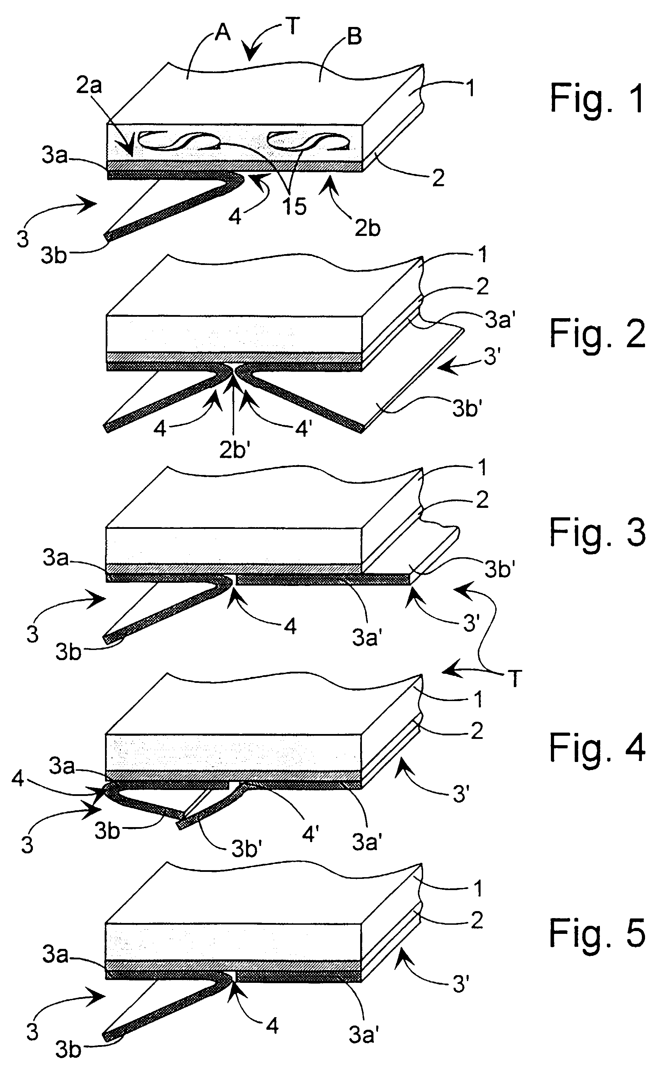

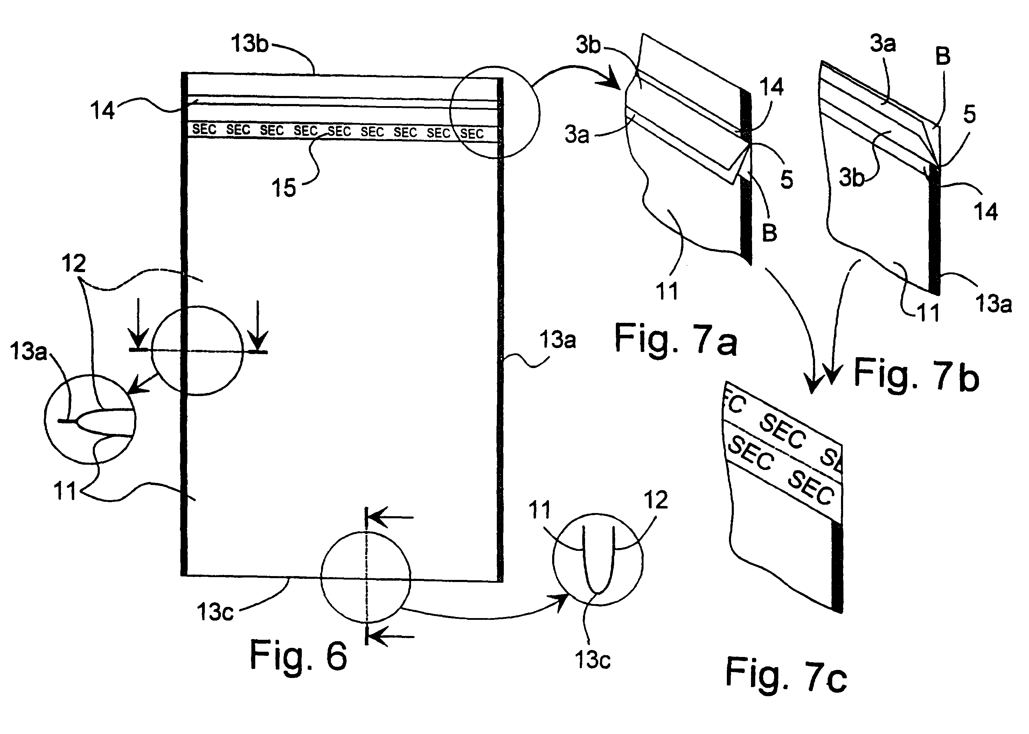

The adhesive strip T is formed, by methods known as such, of an elongated surface film 1 made of plastic or the like, having an even width and comprising one or several film parts. The lower surface of the surface film is preferably entirely coated with a glue layer 2. Figure 1 illustrates the adhesive strip particularly ready for pre-installation. In the longitudinal direction of the glue layer 2, an unbroken strip of it is covered, i.e., covered part 2a which is advantageously about a half of the width of the glue layer 2 starting from its edge in the longitudinal direction of the adhesive strip, by a protective slip 3 comprising a counterfoil 3a and a releasing part 3b. The counterfoil 3a is placed against the glue layer 2 and the releasing part 3b as an extension of the counterfoil 3a, preferably at its edge on the side of the middle section of the glue layer 2, so that a fold 4 is formed between the counterfoil 3a and the releasing part 3b along the edges of the adhesive strip T. Thanks to the fold 4, the releasing part 3b is not brought into contact with the free section 2b of the glue layer 2 and, particularly according to this invention, the releasing part 3b is placed on the same half of the adhesive strip in its longitudinal direction, seen from the central line of the adhesive strip, as the counterfoil 3a, preferably substantially along and on top of the counterfoil 3a. For facilitating the handling of the protective slip 3, an auxiliary fold 5 can be formed in the surface film 1 and the glue layer (Fig. 7), wherein the adhesive strip is divided into parts A and B.

The plastic bag shown in Fig. 6 is formed by methods known as such into a substantially rectangular piece of plastic or corresponding material, usually a continuous plastic film sheeting comprising one or several film parts by folding the plastic film sheeting in half at its middle part and fixing together the front wall 11 and back wall 12 thus formed at the side edges and at the upper edge by vertical seams 13a and a horizontal seam 13b, respectively, e.g. by heat sealing. The bottom of the safety bag is formed as such of the fold 13c of said plastic film. Close to the upper edge of the safety bag, at a distance from the upper edge of the front wall, i.e., underneath and advantageously parallel with the horizontal seam 13b, an opening 14 is made by cutting the front wall 11 of the safety bag open preferably in the whole width of the safety bag to the vertical seams 13a in connection with the opposite edges of the safety bags in a way that the vertical seams 13a are left intact. Figure 6 as well as Fig. 1 show also schematically the safety mark 15 of the adhesive strip T which is revealed when there is an attempt to open the closed adhesive strip T. It is obvious that the safety bag can be composed of separate front and back walls 11, 12, wherein it is seamed at all edges.

The structure of the safety bag which is characteristic of this invention is illustrated particularly in Fig. 7 showing two alternatives for pre-installation of the adhesive strip T to the front wall 11 of the safety bag. Preferably the adhesive strip T of Fig. 1, particularly part B, is fixed on top of the free section 2b of the glue layer (i.e., on top of the section which has possibly been covered with a protective slip 3' which has been removed, cf. Figs. 2 to 5) underneath (Fig. 7a) or above (Fig. 7b) of the opening 14 parallel with the opening 14 in the vicinity of the opening 14, wherein the auxiliary fold 5 is placed close to the opening 14, and the part A of the adhesive strip placed on the other side of the auxiliary fold 5 and the protective slip 3 are folded or can be easily folded away from the top of the opening 14. It should be noted that the adhesive strip T extends past the ends of the opening 14 all the way over the vertical seams 13a to the opposite edges of the safety bag. It is obvious that the adhesive strip T can be extended even over the edges of the safety bag, wherein the ends of the adhesive strip T can be folded and fixed to the back wall 12. The opening 14 is closed by detaching the protective slip 3 by grasping its releasing part 3b and removing the counterfoil 3a from the part 2a of the glue layer 2 covered with the protective slip 3. Thus the entire glue layer 2 is available, and the unfixed part A of the adhesive strip T is folded over the opening 14 to be fixed to the part of the front wall 11 on the other side of the opening, wherein the upper edge of the adhesive strip T is placed parallel to the horizontal seam 13b in the upper part of the safety bag, as shown in Fig. 7c. These operations can be conducted by machine or manually.

Figures 2 to 5 show some advantageous embodiments of the adhesive strip T, in which substantially the entire glue layer 2 is covered for example at the stage of storing the adhesive string and before pre-installation. As can be seen, the first protective slip 3 presented above (Fig. 1) is also in these embodiments similar to that presented above, but the free part 2b of the glue layer according to Fig. 1 is covered with a second protective slip 3', and the differences in these embodiments are primarily related to the structure of the releasing part 3b' of the second protective slip 3'.

As shown in Fig. 2, the first protective slip 3 and the second protective slip 3' are substantially identical in shape and symmetrical. Their folds 4, 4' are against each other in the longitudinal direction of the adhesive band T in its middle section. In Fig. 3, the releasing part 3b' is placed as an extension of the counterfoil 3a' outside the outer edge of the adhesive strip T. In Fig. 4, the fold 4 is at the edge of the adhesive strip T, wherein the releasing part 3b faces the middle of the adhesive strip T and not the edge of the adhesive strip T, starting from the fold 4, as in the previous embodiments. The releasing part 3b' of the second protective slip 3' is folded substantially in connection with the releasing part 3b of the first protective slip 3, preferably on top of it. In Fig. 5, the second protective slip 3' comprises only the counterfoil 3a'. The embodiment of Fig. 5 is useful for example in pre-installation of the adhesive strip by machine. It is obvious that the presented counterfoils 3a, 3a', as well as the releasing parts 3b, 3b' can have different widths and also otherwise differ from the dimensions and positions shown in the figures.

It is obvious that the adhesive strip according to the invention is applicable for closing also an opening 14 which is formed by leaving the upper edge of the bag open, wherein the auxiliary fold 5 of the adhesive strip is placed on the top edge of the bag and the part B of the adhesive strip in the upper part of the front wall 11 and part A in the upper part of the back wall 2 (or vice versa). It is also obvious that the ends of the adhesive strip can extend over the side edges of the safety bag, wherein they are fixed on the back wall 12.

In safety adhesive applications, the joint between the surface film 1 and the glue layer 2 can be prepared to be such that the safety adhesive mark is revealed in a way that when the adhesive strip is detached from the adhesion area of the installation bottom, for example a closed safety bag, part of the glue layer 2 remains stuck in the surface film 1 and part is stuck in the adhesion area of the installation bottom in a pattern determined by the safety mark. The pattern may possibly be coloured.

It is obvious that also more than two protective slips 3, 3', ... can be placed in connection with the glue layer 2. Further, the protective slips 3, 3', ... can be placed so that part of the glue layer 2 is left free, wherein this free glue layer section 2b' (Fig. 2) can be used for pre-installation of the adhesive strip T.

The invention is not limited only to the embodiments presented above, but it can be modified within the scope of the inventive idea presented in the appended claims.

## Claims

1. Safety bag comprising
- a front wall (11) and a back wall (12) manufactured of a plastic film comprising one or several film parts, the walls being connected with each other at their edges, and the safety bag comprising an opening (14) formed substantially in the upper part of its front wall (11), and
- an adhesive strip (T) for sealing the opening (14), the adhesive strip (T) comprising an elongated surface film (1) made of plastic, having substantially an even width and comprising one or several film parts, wherein at least one side of the surface film (1) is provided with a glue layer (2) by treating it with a gluing agent advantageously continuously and advantageously on its whole width, wherein the glue layer (2) is provided with a detachable protective slip (3), which is arranged to cover the glue layer (2) in part by counterfoil (3a) placed against the glue layer (2), wherein
- the adhesive strip (T) is fixed onto the front wall (11) of the safety bag parallel to the opening (14) by means of the free section (2b) of the glue layer (2) in a manner that the section (2a) of the glue layer (2) covered with the protective slip (3) can be revealed and fixed to the other side of the opening (14), and wherein
- the adhesive strip (T) is provided with an arrangement (15) for the purpose of revealing clearly the detachment of the adhesive strip (T) or its part from the adhesion area, although the adhesive strip were fixed again on said adhesion area,
**characterized** in that the protective slip (3) further comprises a releasing part (3b) attached to the counterfoil (3a) for removing the protective slip (3) from the glue layer (2) by grasping the releasing part (3b), and wherein the releasing part (3b) is placed as an extension of the counterfoil (3a), adjoining the longitudinal edge of the counterfoil (3a).

2. Safety bag according to claim 1, provided with vertical seams (13a) on opposite edges, **characterized** in that the opening (14) is formed between the vertical seams (13a), and that the length of the adhesive strip (T) is at least equal to the width of the safety bag at the opening (14), wherein the adhesive strip (T) extends over both vertical edges (13a).

3. Safety bag according to claim 1, **characterized** in that the opening (14) is formed at the upper edge of the safety bag, wherein the pre-installed adhesive strip (T) is glued parallel to the upper edge substantially on the dimension of the free section (2b) of the glue layer (2) in the upper part of the front wall (11) in a way that the section (2a) of the glue layer (2) covered with the protective slip is left as an extension of the safety bag substantially to be folded over the opening (14) and fixed over the opening (14) to the upper part of the back wall.

## Patentansprüche

1. Sicherheitsbeutel mit
- einer Vorderwand (11) und einer Rückwand (12) aus einer Plastikfolie mit einem oder mehreren Folienteilen, wobei die Wände miteinander an ihren Enden verbunden sind, und wobei der Sicherheitsbeutel eine Öffnung (14) hat, die im wesentlichen in dem oberen Teil der Vorderwand (11) ausgebildet ist, und
- einem Adhäsionsstreifen (T) zum Verschließen der Öffnung (14), wobei der Adhäsionsstreifen (T) eine längliche Oberflächenfolie (1) aus Plastik mit einer im wesentlichen gleichmäßigen Breite und mit einen oder mehreren Folienteilen hat, wobei mindestens eine Seite des Oberflächenfilms (1) mit einer Klebeschicht (2) durch Behandlung mit einem Klebemittel vorzugsweise kontinuierlich und vorzugsweise über die gesamte Breite versehen ist, wobei die Klebeschicht (2) mit einem lösbaren Schutzstreifen (3) versehen ist, der angeordnet ist, um die Klebeschicht (2) teilweise durch eine Gegenfolie (3a) zu bedecken, die auf der Klebeschicht (2) angeordnet ist, wobei
- der Adhäsionsstreifen (T) an der Vorderwand (11) des Sicherheitsbeutels parallel zur Öffnung (14) mittels des freien Abschnitts (2b) der Klebeschicht (2) in einer Weise befestigt ist, dass der Abschnitt (2a) der Klebeschicht (2), der mit dem Schutzstreifen (3) überdeckt ist, freigelegt und mit der anderen Seite der Öffnung (14) befestigt werden kann, und wobei
- der Adhäsionsstreifen (T) eine Anordnung (15) zum vollständigen Freilegen des Abschnitts des Adhäsionsstreifens (T) oder seines Teils von dem Adhäsionsgebiet hat, obwohl der Adhäsionsstreifen (T) mit dem Adhäsionsgebiet verbunden ist, **dadurch gekennzeichnet,** dass der Schutzstreifen (3) einen lösbaren Teil (3b) hat, der mit der Gegenfolie (3a) zum Entfernen des Schutzstreifens (3) von der Klebeschicht (2) durch Greifen des lösbaren Teils (3b) verbunden ist, und wobei der lösbare Teil (3b) eine Verlängerung der Gegenfolie ist, der an die Längskante der Gegenfolie (3a) anschließt.

2. Sicherheitsbeutel nach Anspruch 1 mit vertikalen Nähten (13a) an gegenüberliegenden Kanten, **dadurch gekennzeichnet,** dass die Öffnung (14) zwischen den vertikalen Nähten (13a) gebildet ist, und dass die Länge des Adhäsionsstreifens (T) mindestens der Breite des Sicherheitsbeutels an der Öffnung (14) entspricht, wobei sich der Adhäsionsstreifen (T) über beide vertikalen Kanten (13a) erstreckt.

3. Sicherheitsbeutel nach Anspruch 1, **dadurch gekennzeichnet,** dass die Öffnung (14) an der unteren Kante des Sicherheitsbeutels gebildet ist, wobei der vorinstallierte Adhäsionsstreifen (T) parallel an die untere Kante im wesentlichen an der Maßlinie des freien Abschnitts (2b) der Klebeschicht (2) in dem unteren Teil der Vorderwand (11) derart angeklebt ist, dass der Abschitt (2a) der Klebeschicht (2), die mit dem Schutzstreifen bedeckt ist, als Vorsprung des Sicherheitsbeutels ausgerichtet ist, der im wesentlichen über die Öffnung (14) gefaltet und über der Öffnung (14) an dem unteren Teil der Rückwand befestigt werden kann.

## Revendications

1. Sac de sécurité comportant:
- une paroi avant (11) et une paroi arrière (12) fabriquées en un film plastique comprenant une ou plusieurs parties formant le film, les parois étant reliées l'une à l'autre à leurs bords et le sac de sécurité présentant une ouverture (14) substantiellement formée dans la partie supérieure de sa paroi avant (11) et
- un ruban adhésif (T) pour sceller l'ouverture (14), le ruban adhésif (T) comprenant un film allongé formant une surface (1), fait de plastique, présentant substantiellement une largeur régulière et contenant une ou plusieurs parties formant le film, étant précisé que l'on a revêtu au moins une face du film formant la surface (1) d'une couche de colle (2) en la traitant avec un agent collant, avantageusement de façon continue et avantageusement sur toute sa largeur, la couche de colle (2) étant munie d'un galon protecteur détachable (3) disposé pour que la couche (2) soit en partie recouverte par la souche (3a) placée contre la couche de colle (2), dans le cas duquel
- on fixe le ruban adhésif (T) sur la paroi avant (11) du sac de sécurité, parallèlement à l'ouverture (14), au moyen de la section libre (2b) de la couche de colle (2) de façon à pouvoir faire apparaître la portion (2a) de la couche de colle (2) recouverte du galon protecteur détachable (3) et à la fixer de l'autre côté de l'ouverture (14), et dans le cas duquel
- le ruban adhésif (T) présente un moyen (15) de révéler clairement le fait que le ruban adhésif (T), ou une partie de ce ruban, ait été détaché de la zone d'adhérence, bien que le ruban adhésif ait été fixé à nouveau ensuite sur ladite zone d'adhérence,
caractérisé par le fait que le galon protecteur détachable (3) comporte une partie (3b) attachée à la souche (3a), par laquelle on le détache, pour détacher le galon protecteur détachable (3) d'avec la couche de colle (2) en saisissant la partie (3b) par laquelle on le détache et la partie (3b) par laquelle on le détache étant placée en tant que prolongement de la souche (3a), contiguë au bord longitudinal de la souche (3a).

2. Sac de sécurité selon la revendication 1, présentant des cordons de soudure verticaux (13a) sur les bords opposés, caractérisé par le fait que l'ouverture (14) est formée entre les cordons de soudure verticaux (13a) et que la longueur du ruban adhésif (T) est au moins égale à la largeur du sac de sécurité à l'ouverture (14), le ruban adhésif (T) s'étendant sur les deux bords verticaux (13a).

3. Sac de sécurité selon la revendication 1, caractérisé par le fait que l'ouverture est formée au bord supérieur du sac de sécurité, dans le cas duquel on colle le ruban adhésif (T), pré-installé, parallèlement au bord supérieur, substantiellement sur la dimension de la portion libre (2b) de la couche de colle (2) dans la partie supérieure de la paroi avant (11) de façon que la portion (2a) de la couche de colle (2) recouverte du galon protecteur détachable soit laissée sous forme de prolongement du sac de sécurité, substantiellement pour être repliée par dessus l'ouverture (14) et fixée, par delà l'ouverture (14), à la partie supérieure de la paroi arrière.
